# EUROPÄISCHE PATENTANMELDUNG

(11) **EP 1 447 272 A2**
(43) Veröffentlichungstag der Anmeldung: **18.08.2004**
(21) Anmeldenummer: 04003257.5
(22) Anmeldetag: 13.02.2004
(51) Int. Cl.: B60R 3/00, A61G 3/06

(54) **Ausschwenkbare Rampe für Fahrzeuge**

(30) Priorität: 14.02.2003 DE 10306526
(71) Anmelder: IBEG systems GmbH, 45770 Marl (DE)
(72) Erfinder: Pietrowski, Peter, 45770 Marl (DE)
(74) Vertreter: Kreutzer, Ulrich, Dipl.-Phys.

(57) **Zusammenfassung**

Bekannte ausschwenkbare Rampen zur seitlichen Anordnung im Eingangsbereich eines Fahrzeuges können nur eine verhältnismäßig beschränkte Breite aufweisen, da sie im eingeklappten Zustand ansonsten den Durchgang in der Fahrzeugrichtung behinderten. Zudem weisen bekannte Rampen nur eine geringe Auflagefläche der ausgeklappten Rampe auf dem Fahrzeugboden und dadurch eine beschränkte Stabilität auf.

Bei einer erfindungsgemäßen ausschwenkbaren Rampe mit wenigstens zwei in der Draufsicht im wesentlichen rechtwinkligen Segmenten (2, 4, 7), von denen eines (2) im bestimmungsgemäßen Montagezustand an einem Fahrzeug angelenkt ist, sind die Segmente (2, 4, 7) derart aneinander angelenkt, daß die jeweiligen Schwenkachsen zwischen den Segmenten im bestimmungsgemäßen Montagezustand im ausgeklappten Zustand in Fahrtrichtung verlaufen.

## Beschreibung

Die Erfindung betrifft eine ausschwenkbare Rampe für Fahrzeuge, insbesondere für Fahrzeuge für den Personennahverkehr, also Straßenbahnen, U-Bahnen, S-Bahnen, Busse, Züge und dergleichen.

Solche Rampen sind bekannt. Sie werden bedarfsweise ausgefahren oder ausgeklappt, um so Rollstuhlfahrern oder kleineren Transportwägelchen die Zufahrt zu dem jeweiligen mit der Rampe versehenen Fahrzeug zu ermöglichen.

Während motorisch betriebene Rampen weitestgehend automatisch ausfahren, müssen manuelle Rampen von einem Bediener (z.B. Fahrer oder einer Begleitperson) ausgefahren oder ausgeklappt werden.

Manuelle Rampen werden entweder als Bodendeckel ausgeklappt oder als seitlich angebrachte Rampe in den Eingangsbereich eingeschwenkt und dann in Position gebracht. Dabei haben seitlich angebrachte Rampen den Vorteil, daß deren Einbau keine oder allenfalls ganz geringe Veränderungen der Fahrzeugkonstruktion erfordert.

Aufgrund ihrer universellen Einsetzbarkeit, großen Zuverlässigkeit und aus Kostengründen haben sich seitlich im Eingangsbereich eines Fahrzeugs, nämlich links oder rechts neben einer aufschwenkbaren oder aufschiebbaren Tür angebrachte, manuell betätigbare Rampen durchgesetzt. Solche Rampen können auch bei bestehenden Fahrzeugen in verhältnismäßig einfacher Weise nachgerüstet werden.

Die bekannten Rampen zur seitlichen Anordnung im Eingangsbereich eines Fahrzeugs sind über einen Schwenkhebel mit dem Fahrzeugboden verbunden. Im Ruhezustand stehen sie aufrecht im Eingangsbereich eines damit versehenen Fahrzeugs, also quasi wie eine nach innen geöffnete Tür, und werden in dieser Position von dem Schwenkhebel und gegebenenfalls vorgesehenen lösbaren Fixierungen gehalten.

Bei Benutzung werden sie zunächst um 90° geschwenkt, etwa so, als wollte man einen nach innen geöffneten Türflügel schließen, und dann derart nach außen geklappt, daß die dem Fahrzeug zugewandte Außenkante den Fahrzeugboden im Bereich der Tür nur in einem ganz geringen Maße überlappt und die Rampe im wesentlichen also von dem Schwenkhebel gehalten wird. Je nach Länge der Rampe (gesehen in Richtung des Ein- oder Ausstiegs in das Fahrzeug) und Höhe des Fahrzeuges wird die Rampe dabei um einen Winkel von typischerweise 125° bis 135° nach außen geklappt. Da solche Rampen im Regelfall aus zwei etwa gleich großen, an einer Längsseite aneinander angelenkten Blechen bestehen, müssen schließlich noch die beiden Bleche auseinander geklappt werden, so daß schließlich die beiden Bleche nebeneinander liegen und so eine in Auffahrrichtung in eine linke und rechte Hälfte geteilte Rampe von einer Straße bzw. von einem Bürgersteig in das Fahrzeug bilden.

Ein Problem bei diesen bekannten Rampen ist die konstruktionsbedingte beschränkte Breite (wiederum gesehen in Ein- oder Ausstiegsrichtung): die Rampen können nur eine verhältnismäßig beschränkte Breite aufweisen, da sie sonst im eingeklappten Zustand, in welchem sie etwa rechtwinklig zur Fahrtrichtung stehen, den Durchgang in der Fahrzeugrichtung behindern. Ein weiteres Problem ist die beschränkte Stabilität der Rampe aufgrund der nur geringen Auflagefläche der ausgeklappten Rampe auf dem Fahrzeugboden.

Davon ausgehend liegt der Erfindung die Aufgabe zugrunde, eine verbesserte ausklappbare Rampe für Fahrzeuge anzugeben.

Die Aufgabe wird gelöst von einer Rampe gemäß Anspruch1. Einzelheiten und Vorteile der Rampe ergeben sich aus der nachfolgenden detaillierten Beschreibung eines Ausführungsbeispiels in Verbindung mit der Zeichnung, in welcher:
- Fig. 1: eine schematische Darstellung einer erfindungsgemäßen Rampe im komplett eingeklappten Zustand (Ruheposition) in Draufsicht (gesehen in Richtung auf den Fahrzeugboden) zeigt,
- Fig. 2: die Rampe gemäß Fig. 1 im ausgeklappten, jedoch noch nicht in Richtung auf den Fahrzeugboden geschwenkten Zustand in Draufsicht zeigt ,
- Fig. 3: eine Draufsicht auf die Rampe gemäß Fig. 2 im in Richtung auf den Fahrzeugboden geschwenkten Zustand zeigt,
- Fig. 4: eine Seitenansicht auf die komplett ausgeklappte, umgeschwenkte und in Richtung auf den Straßenboden abgeklappte Rampe (Arbeitsposition) zeigt und
- Fig. 5: in vier Einzelfiguren (a) bis (d) schematisch den Ablauf des Ausklappens der Rampe von der Ruheposition in die Arbeitsposition zeigt.

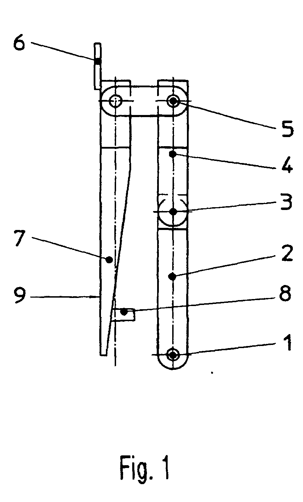

In Fig. 1 ist eine erfindungsgemäße Rampe in der "Ruheposition" gezeigt, in welcher sie z.B. in einer Straßenbahn im Eingangsbereich neben einer hier nicht gezeigten Tür stünde.

Die Rampe umfaßt ein Drehschwenkgelenk 1, ein erstes Segment 2 (nachfolgend Basisplattform genannt), ein erstes Scharnier 3, ein zweites Segment 4, ein zweites Scharnier 5, einen Anschlag 6, ein drittes Segment 7, eine hier nur angedeutete Verriegelung 8 und eine zur leichten Anbringung von Hinweistafeln wie z.B. Bedienungsinformationen oder Werbeplakaten ausgebildete Fläche 9.

Die Basisplattform 2 ist über das Drehschwenkgelenk 1 mit einem nicht gezeigten Fahrzeug verbunden. Das Drehschwenkgelenk 1 läßt eine einstellbare Drehung bis über 180° zu.

Über das Scharnier 3 ist das Segment 4 mit der Basisplattform 2 verbunden. Über das Scharnier 5 ist das Segment 7 mit dem Segment 4 verbunden.

Eine nur angedeutete Verriegelung 8, z.B. in Form von Rastelementen, die mit entsprechenden Elementen am Fahrzeug zusammenwirken können, dient zum Fixieren der Rampe in der Ruhestellung, so daß sie auch in Fahrt sicher gehalten ist.

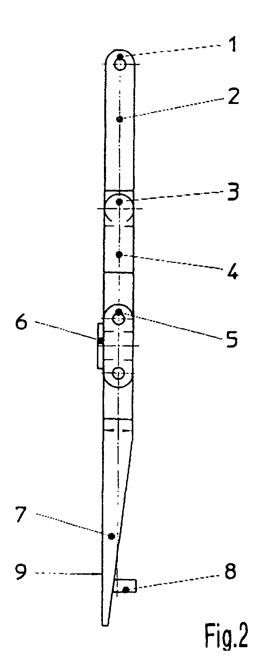

Die Fig. 2 zeigt die entriegelte und aufgeklappte senkrechte Stellung der Rampe. Die Basisplattform 2 ist in dem dargestellten Beispiel um 180° um das Drehschwenkgelenk 1 gedreht worden. Das Segment 7 ist um das Scharnier 5 bis zum Anschlag 6 aufgeklappt. In dieser Position kann das Drehschwenkgelenk geschwenkt werden.

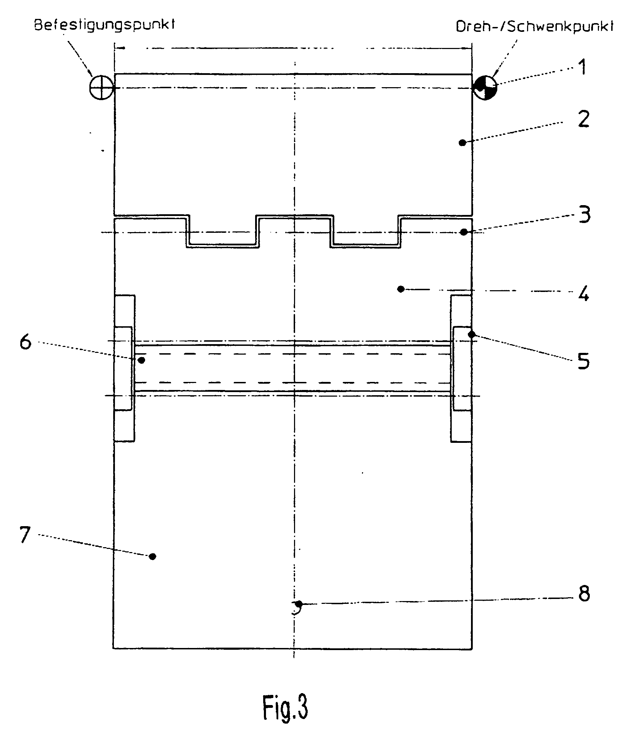

In der in Fig. 3 gezeigten Stellung ist die Rampe soweit zum Fahrzeugboden hingeschwenkt, daß die Basisplattform 2 komplett auf dem Fahrzeugfußboden aufliegt. Die Basisplattform 2 kann in dieser Lage am Fahrzeugfußboden mittels hier nicht weiter gezeigter Befestigungsmittel temporär fixiert werden, zum Beispiel am in Fig. 3 bezeichneten "Befestigungspunkt".

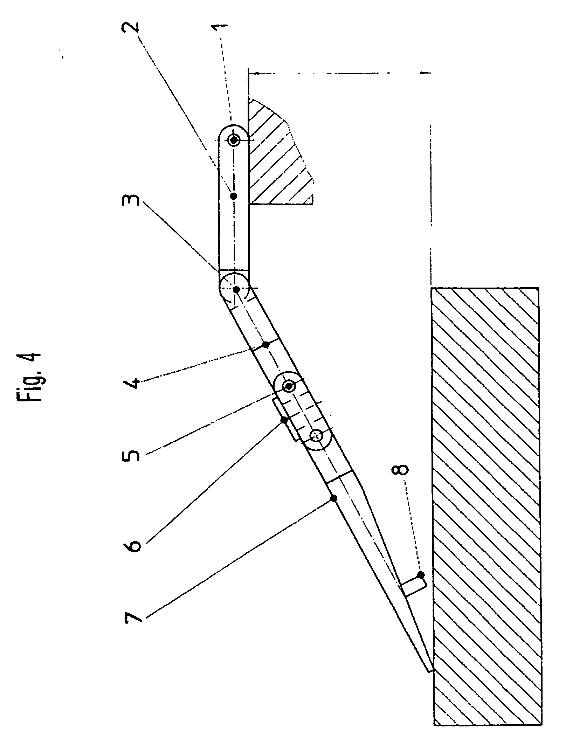

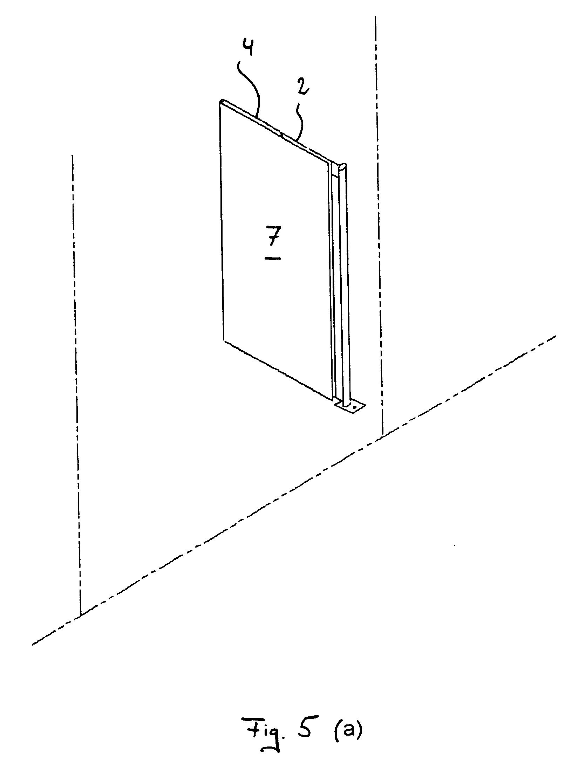

Fig. 4 zeigt die ausgeklappte Rampe. Man erkennt deutlich, daß sich die Segmente 4 und 7 um das Scharnier 3 bis zum Straßenniveau hin absenken können und somit eine schräge Auffahrt in das Fahrzeug ermöglichen.

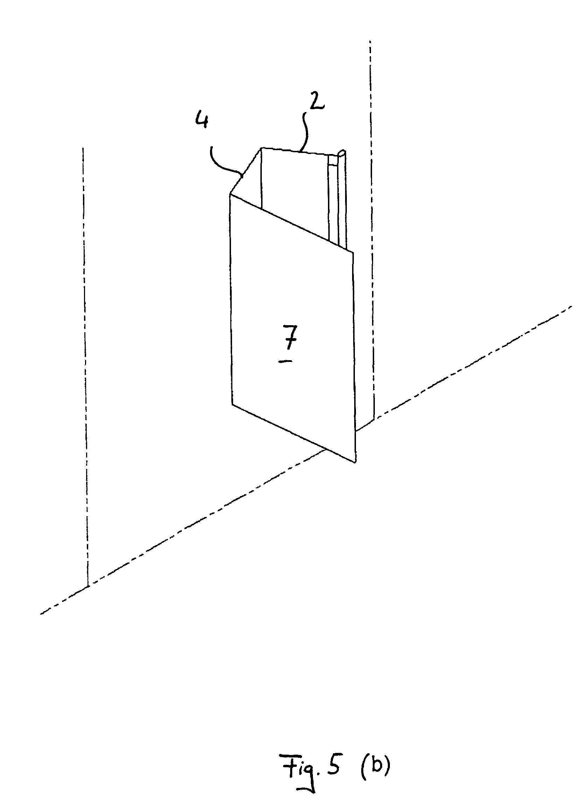

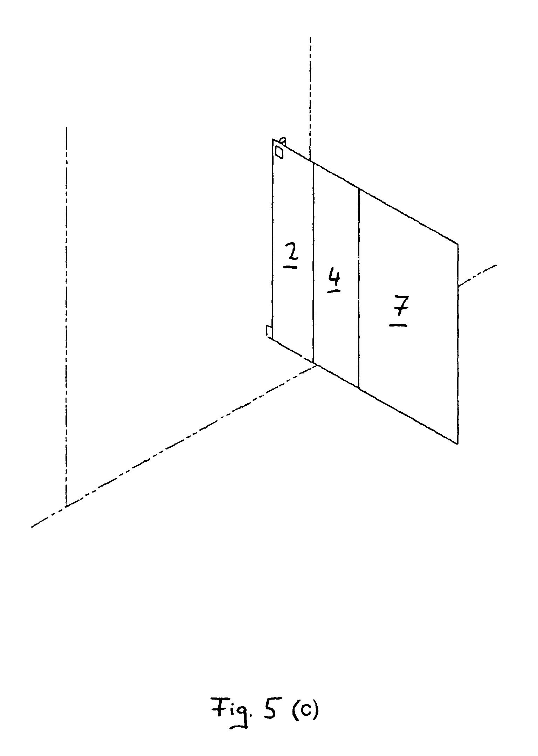

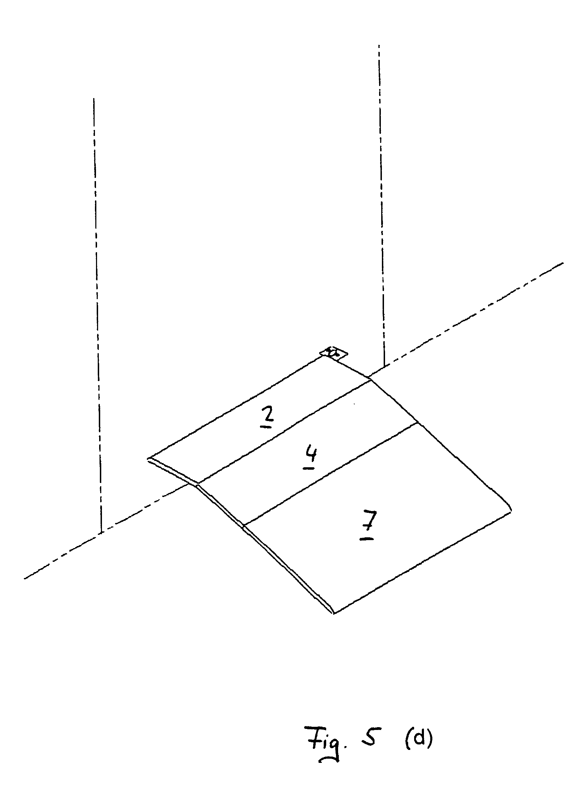

Die Fig. 5 zeigt rein schematisch den Ablauf des Ausklappens einer erfindungsgemäßen Rampe. Im Bild (a) der Fig. 5 steht die Rampe in der Ruheposition zusammengeklappt im Eingangsbereich einer Tür. Im Bild (b) sind die Segmente 4 und 7 und die Basisplattform 2 bereits teilweise auseinandergefaltet. Im Bild (c) sind die Basisplattform, das Segment 4 und das Segment 7 komplett auseinandergefaltet, so daß sie miteinander fluchten. Im Bild (d) ist die Plattform schließlich mittels des Drehschwenkgelenkes zum Fahrzeugboden hin geklappt, so daß die Basisplattform auf dem Fahrzeugboden aufliegt, während die Segmente 4 und 7 von der Basisplattform 2 schräg nach unten zum Boden weisen, wobei das Segment B auf dem Boden, also z.B. einem Bürgersteig aufliegt.

Wie in Fig. 5 gut zu erkennen, sind die beiden Segmente 4 und 7, die die eigentliche Auffahrfunktion im ausgeklappten Zustand erfüllen, im ausgeklappten Zustand in Fahrtrichtung geteilt, während die bislang bekannten Rampen wie oben beschrieben in Einstiegsrichtung geteilt sind.

Die rein beispielhaft und nicht-beschränkend dargestellte Rampe zeichnet sich unter anderem dadurch aus,
- daß sie über die als Trägereinheit wirkende stabile Basisplattform sehr leicht bedienbar ist;
- daß die Basisplattform das einzige Element, das auf die fahrzeugspezifischen Einbauverhältnisse (Abstand Drehschwenkgelenk zur Fußbodenaußenkante) angepaßt werden muß, während für die anderen Teile Standardteile verwendet werden können;
- daß die Basisplattform mit dem Fahrzeugfußboden oder der Fahrzeugseitenwand lediglich über ein Dreh-Schwenkgelenk verbunden ist;
- daß über das Dreh-Schwenkgelenk die gewünschte Bewegung der Rampe von einer senkrechten in eine horizontale Lage durch manuelle Unterstützung leicht erbracht werden kann;
- daß die Basisplattform in der ausgeklappten Stellung durch geeignete, an die jeweiligen Fahrzeugverhältnisse angepaßte Mittel sicher in Position gehalten wird;
- daß sie problemlos an entsprechenden Fahrzeug nachgerüstet werden kann und bei Bedarf schnell demontierbar ist;
- daß die Unterseite des Segmentes 7 in der eingeklappten Ruheposition zur Anbringung von Bedien- oder sonstigen Hinweisen genutzt werden kann;
- daß das Segment 7 mit seitlichen Erhöhungen ausgeführt werden kann, die ein seitliches Abrollen eines Rollstuhls oder eines Transportwagens sicher verhindern, wobei solche seitlichen Erhöhungen im eingeklappten Ruhezustand vorteilhaft als obere und untere Abdeckung der Rampe dienen;
- daß die Segmente 4 und 7 durch Anschläge gegen ein ungewolltes Durchknicken geschützt sind; und
- daß Ausklapplänge und Einfahrbreite leicht an die jeweiligen Kundenwünsche angepaßt werden können.

Im Rahmen des Erfindungsgedankens sind zahlreiche Abwandlungen und Weiterbildungen möglich. Eine Besonderheit der Erfindung ist jedenfalls die Anlenkung der einzelnen Segmente aneinander derart, daß die jeweiligen Schwenkachsen zwischen den Segmenten im bestimmungsgemäßen Montagezustand im ausgeklappten Zustand in Fahrtrichtung verlaufen, was bewirkt, daß eine breite Rampe im zusammengeklappten Zustand zwar länger, aber nicht breiter ist als eine ansonsten gleichgroße schmale Rampe und daher im zusammengeklappten Zustand den Durchgang in einem Fahrzeug nicht behindert.

Eine weitere Besonderheit ist, daß durch die Verwendung der Basisplattform der Anflanschpunkt des Dreh-Schwenkgelenkes an unterschiedlichen Stellen im Fahrzeug erfolgen kann, das heißt, daß der Abstand zur Ausstiegskante unterschiedlich lang sein kann. Die Basisplattform kann dann entsprechend der Fahrzeugverhältnisse auf die Länge angepaßt werden. Ebenfalls kann die Gestaltung der Basisplattform den seitlichen Längenausgleich vornehmen. Durch entsprechende Ausgestaltung der einzelnen Elemente der Plattform und insbesondere der Seitenbereiche der Basisplattform der weiteren Segmente, kann die Rampe im zusammengeklappten Zustand eine Einheit bilden, die keiner weiteren Abdeckung etwa durch eine Tasche oder einen Schutzüberzug bedarf und bei der trotzdem versehentliche Quetschungen oder dergleichen sicher ausgeschlossen sind.

## Patentansprüche

1. Ausschwenkbare Rampe für Fahrzeuge, insbesondere für Fahrzeuge für den öffentlichen Personennahverkehr, mit wenigstens zwei in der Draufsicht im wesentlichen rechtwinkligen Segmenten (2, 4, 7), von denen eines (2) im bestimmungsgemäßen Montagezustand an einem Fahrzeug angelenkt ist,
**dadurch gekennzeichnet,**
**daß** die Segmente (2, 4, 7) derart aneinander angelenkt sind, daß die jeweiligen Schwenkachsen zwischen den Segmenten im bestimmungsgemäßen Montagezustand im ausgeklappten Zustand in Fahrtrichtung verlaufen.

2. Rampe nach Anspruch 1,
**dadurch gekennzeichnet,**
**daß** die Rampe aus drei Segmenten (2, 4, 7) besteht, von denen eines eine Basisplattform (2) bildet, die über eine Drehschwenkgelenk (1) mit dem Fahrzeugboden oder einer Fahrzeugseite verbunden werden kann und an deren einer Längsseite ein zweites Segment (4) angelenkt ist, an dessen der Basisplattform gegenüberliegender Längsseite das dritte Segment (7) angelenkt ist.

3. Rampe nach Anspruch 1 oder 2,
**dadurch gekennzeichnet,**
**daß** eines der Segmente (2) derart um ein Drehschwenkgelenk (1) schwenkbar ist, das es in einer Ruheposition aufrecht im Eingangsbereich einer Fahrzeugtür stehen kann und in einer Arbeitsposition flach auf dem Fahrzeugboden anliegt.

4. Rampe nach einem der Ansprüche 1 bis 3,
**dadurch gekennzeichnet,**
**daß** zwei Segmente (4, 7) derart an einem dritten Segment (2) angelenkt sind, daß sie im Ruhezustand aufrecht im Eingangsbereich eines Fahrzeugs stehen können und im Benutzungszustand eine von dem dritten Segment abgewinkelte schräge Auffahrt bilden.

5. Rampe nach einem der Ansprüche 1 bis 4,
**dadurch gekennzeichnet,**
**daß** Mittel zum Sichern eines der Segmente (2) in der ausgeklappten Stellung am Fahrzeugboden vorgesehen sind.

6. Rampe nach einem der Ansprüche 1 bis 5,
**dadurch gekennzeichnet,**
- **daß** die im ausgeklappten Zustand einer Straße zugewandte Seite eines der Segmente (7) zur Aufnahme von Bedien- oder sonstigen Hinweisen ausgebildet ist.

7. Rampe nach einem der Ansprüche 1 bis 6,
**dadurch gekennzeichnet,**
- **daß** wenigstens eines der Segmente (7) mit seitlichen Erhöhungen zum Verhindern des seitlichen Abrollens eines Rollstuhls o.dgl. versehen ist.

8. Rampe nach einem der Ansprüche 1 bis 7,
**dadurch gekennzeichnet,**
- **daß** wenigstens ein Anschlag (6) zum Definieren einer Endlage beim Verschwenken der Segmente relativ zueinander vorgesehen ist.
